(19)

Europäisches
Patentamt
European
Patent Office
Office européen
des brevets

(11) **EP 3 046 071 A1**

(12) **EUROPEAN PATENT APPLICATION**

(43) Date of publication:
**20.07.2016 Bulletin 2016/29**

(51) Int Cl.:
***G06T 5/00*** *(2006.01)*      ***G06T 5/40*** *(2006.01)*
***G06T 5/50*** *(2006.01)*

(21) Application number: **15305030.7**

(22) Date of filing: **15.01.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Hellier, Pierre
35576 Cesson-Sévigné (FR)**
• **Perez, Patrick
35576 Cesson-Sévigné (FR)**

(74) Representative: **Huchet, Anne
Technicolor
1, rue Jeanne d'Arc
92443 Issy-les-Moulineaux Cedex (FR)**

(54) **Methods and apparatus for groupwise contrast enhancement**

(57)    A particular implementation for contrast enhancement for a group of images in a database uses locally linear embedding on the luma histograms of the images to capture the structure of the database through local linear relationships between images. Target histograms are determined based on the result of the locally linear embedding process. The columns of the target histogram matrices are used for each image within the database to enhance the contrast of the image.

<u>100</u>

Figure 1

**Description**

TECHNICAL FIELD

The present principles relate generally to methods and apparatus for contrast enhancement of a database of images.

BACKGROUND

The enhancement of personal photos acquired with low-quality cameras is a challenge, particularly in light of the large number of smartphones in use. Among the characteristics of photos that need enhancement, contrast is definitely to be considered especially for pictures taken in low-light conditions. Due to the explosion of personal image databases, there is a need for completely automatic and robust enhancement tools. Despite the large number of work on contrast enhancement, a need exists for a contrast enhancement technique that processes a database as a whole by preserving the structure of the image database, i.e., preserving the photometric relationships between images. The techniques proposed herein describe such a method, where locally linear embedding is used to capture local relationships between images. Then, these relationships are explicitly preserved by a new contrast enhancement method. The proposed apparatus and method leads to a more robust and reliable contrast enhancement.

SUMMARY

These and other drawbacks and disadvantages of the prior art are addressed by various described embodiments, which are directed to methods and apparatus for contrast enhancement of a database of images.

According to one general aspect, a method for groupwise contrast enhancement is provided. The method is comprised of a step for performing locally linear embedding on images from a database to generate a weight matrix. The method is further comprised of a step for generating target histograms from the weight matrix. The method is further comprised of a step for histogram equalization using the target histograms performed on images from a database to generate enhanced contrast images.

According to another general aspect, there is provided an apparatus for groupwise contrast enhancement. The apparatus is comprised of a first processor configured to perform locally linear embedding on images from a database to generate a weight matrix. The apparatus is further comprised of a second processor configured to generate target histograms from the weight matrix. The apparatus is further comprised of a matrix multiplier to perform histogram equalization on images from the database using the target histograms to generate enhanced contrast images.

The details of one or more implementations are set forth in the accompanying drawings and the description below. Even if described in one particular manner, it should be clear that implementations may be configured or embodied in various manners. For example, an implementation may be performed as a method, or embodied as an apparatus, such as, for example, an apparatus configured to perform a set of operations or an apparatus storing instructions for performing a set of operations, or embodied in a signal. Other aspects and features will become apparent from the following detailed description considered in conjunction with the accompanying drawings and the claims.

The invention concerns also a computer program product downloadable from a communication network and/or recorded on a medium readable by computer and/or executable by a processor, comprising program code instructions for implementing a method according to the invention.

The invention concerns also a non-transitory computer-readable medium comprising a computer program product recorded thereon and capable of being run by a processor, including program code instructions for implementing a method according to the invention.

BRIEF DESCRIPTION OF THE DRAWINGS

The present principles may be better understood in accordance with the following exemplary figures, in which:

Figure 1 shows one embodiment of a method for groupwise contrast enhancement.
Figure 2 shows one embodiment of an apparatus for groupwise contrast enhancement.

DETAILED DESCRIPTION

The described embodiments are directed to methods and apparatus for contrast enhancement of a database of images.

Image enhancement aims at improving the image quality by modifying some low-level characteristics such as contrast, sharpness, resolution, for example. Image enhancement has a wide range of applications (computer vision and scene analysis, surveillance, medical imaging, photography are some) and is still needed due to the widespread usage of hand-held digital cameras, especially smartphones. There are several factors that limit the quality of digital photos, for example, the inexperience of the user, the quality of the optics and poor illumination conditions.

Contrast enhancement is useful to produce a higher quality image where the contrast between objects is increased. Basically, it amounts to applying a logistic transformation to the luminance of the image. The expected benefits are a better contrast and a visually more pleasant image. However, some artifacts might be induced if the slope of the transformation is not carefully controlled. A large slope leads to an undesirable stretching of the luminance histogram, which might consequently increase image noise; while a small slope can lead to a loss of contrast and details. In addition, the transformation is applied to the luminance channel. Unfortunately, chrominance/luminance spaces such as *yuv* or *Lab* are not fully decorrelated. Hence, a strong modification of luminance can induce a change in the perceived colors.

There are a large variety of techniques to enhance contrast, most of which amount to manipulating luma curves so that the histogram of luminance values is spread out, eventually driven by perceptual considerations. Some issues were specifically addressed in the art, such as defining a "midway" transformation, dealing with color image enhancement, enhancement in the compressed domain, or dealing with the suppression of compression artifacts.

As described herein, the problem of consistent contrast enhancement for image databases is considered. When considering image databases, there are relationships between images that are important to preserve when performing any type of editing or enhancement. These relationships can be of different types: geometric, photometric, colorimetric, semantic, etc. When performing a batch enhancement of a dataset, relationships between images should be preserved so as to ensure that the structure of the image database is maintained. The expected benefits are a more robust and consistent processing.

Prior methods do not deal explicitly with such constraint. One prior technique describes determining clusters of users, in a collaborative editing context, so that specific editing can be proposed to a new user when he has been assigned to an existing cluster of preferences.

The method described herein describes a contrast enhancement method that explicitly maintains the data structure of an image database. The method is composed of two main steps:

First, the structure of the database is learned through Locally Linear Embedding (LLE). LLE seeks for local linear regressions between each point and its neighbors. In other words, LLE estimates locally a linear subspace that approximates the data manifold. A weight matrix, encoding the relationships existing between images is computed using LLE. The matrix contains neighboring information, such that, for each image, the set of k-closest images is conveyed. The matrix further contains locally linear regression such that the information conveys which linear combination of neighbors best approximates each image. This amounts to estimating the linear subspace that best approximates locally the data manifold. Throughout the remaining description, the term "neighbor" generally refers to parts of images within a database. However, the concepts can apply to video, with neighbors being temporal neighbors.

Locally Linear Embedding can also be performed using information derived from any metadata, such as geostationary positioning satellite (GPS) data, time information, or other such information, for example.

Second, a contrast enhancement method is described that builds on previous works, where a database-coherence term, derived from the LLE, is added. A first prior approach is motivated by a simple observation of histogram equalization (HE): when considering an input image *I*, the non-decreasing transformation defined through the cumulative histogram flattens the input histogram when used to change the image contrast. If the histogram is continuous, the resulting histogram is uniform. The transformation of histogram equalization is however known to introduce artifacts like noise amplification. The first prior approach proposes an intermediate solution, formulating the contrast enhancement as an optimization problem. If *d* denotes the number of bins used to compute histograms, u denotes the uniform histogram (i.e., $u = \frac{1}{d} \left( 1 \ldots 1 \right)^T$), $h_i$ the input histogram (classically for color images, the histogram of y values of the *yuv* decomposition). The method consists in computing the histogram *h* that minimizes:

$$\bar{h} = \arg \min_h ||h - h_i||^2 + \lambda ||h - u||^2 \qquad (1)$$

The solution is a linear weighted combination of the uniform histogram and the input histogram. The resulting histogram is used as in Histogram Equalization (HE), where the luma transformation is obtained through the cumulative distribution function. The HE transformation associated to *h* is computed and applied to the input image. The normalized histogram is denoted as *p* from the solution $\hat{h}$, computed on $2^n$ values. Then the transformation reads as:

$$T(i) = (2^n - 1) \sum_{j=0}^{i} p(j) + 0.5$$

Hence, the transformation will be a compromise between the HE transformation (associated to $h_i$), and the identity transformation (associated to $u$). The present method is a solution where the contrast enhancement is formulated for the entire image database, as an optimization problem. Given a database of $N$ images, a histogram of luma values - i.e., y channel - is computed using $d$ bins. Hence, each image can be represented by a histogram vector $X$. LLE is used to compute the weight matrix $w = [w_{ij}]_{i,j}$ as described above. It provides for each image i, the approximation of its histogram as a linear combination (with weights summing up to one) of those of most resembling images in the collection: $X_i \approx \sum_j w_{ij} X_j$.

Generally speaking, embedding techniques aim at reducing the dimension and complexity of a problem. The input data can be represented as a collection of N points $X_1 \ldots X_N$ in a feature space of dimension $D$ (typically $\mathbb{R}^D$). Embedding methods seek a transformation $f$ that maps each input point $X$ to a point $Y$ in a feature space of dimension $d$, where $d \ll D$. There are numerous applications to the embedding in lower dimension: complexity reduction, scientific visualization, data processing in a lower dimensional space.

There have been a large number of proposed techniques, ranging from linear Principal Component Analysis (PCA) to more sophisticated non-linear techniques. The underlying idea is that there is some coherence in the data, and the dimension D of the input space is uselessly large, since data lie on a structure, or manifold, of lower dimension. Non-linear embedding techniques basically aim at retrieving or learning this structure from the data. Among the various techniques, the Locally Linear Embedding (LLE) is described herein, which will be used hereafter.

LLE assumes that the relationships between data points are locally linear. In other words, the manifold can be locally approximated by a linear subspace. Technically, LLE is performed in the following three steps.

First, a nearest neighbor search is conducted. For each point $X_i$, the $k$ nearest neighbors are computed using any nearest neighbor method.

Next, locally linear regression is performed. Linear regression can be performed on any suitable feature space, such as luma, chroma. The local linear subspace is computed by assuming that any point $X_i$ can be approximated by a linear combination of its neighbors $\{X_j s.t. j \in v(i)\}$, where $v$ stands for the neighbor relationship determined in the previous step above. The data weight matrix $W$ encodes these relationships and is estimated so as to minimize the following cost:

$$\widehat{W} = \arg \min_{W} \sum_{i} ||X_i - \sum_{j \in \mathcal{V}(i)} w_{ij} X_j||^2 \qquad (2)$$

Then, this cost function can be solved analytically if some constraints are met (typically, the number of neighbors should be inferior to the dimension $D$ of the feature space).

LLE can be performed on color descriptors in addition to luma. Or, LLE can be performed using many characteristics, either photometric (luma), colorimetric (color), or as mentioned geometric.

Once the weights $W$ are computed, non-linear embedding is performed by embedding vectors $Y$ in dimension d are computed so as to minimize the reconstruction error:

$$\widehat{Y} = \arg \min_{Y} \sum_{i} ||Y_i - \sum_{j \in \mathcal{V}(i)} w_{ij} Y_j||^2 \qquad (3)$$

Once again, this problem has an analytic solution under a zero mean and unit covariance constraints.

The structure-preserving contrast enhancement method is next described, building on prior methods. Given a database of $N$ images, a histogram of luma values - i.e., y channel - is computed using $d$ bins. Hence, each image can be represented by a histogram vector $X \in \mathbb{R}^d$, and the image database by the set $x = \{X_1 \ldots X_N\}$. LLE is used to compute the weight matrix $W$ as described in section 3.

Next, the present methods estimate the set of target histograms $Y = \{Y_1 \ldots Y_N\}$ by minimizing the following cost function $C$:

$$C = \sum_{i=1}^{N} (||Y_i - X_i||^2 + \lambda||Y_i - u||^2 + \gamma||Y_i - \sum_{j \in V(i)} w_{ij} Y_j||^2), \quad (4)$$

where $u$ is the uniform histogram defined earlier. The first two terms are directly inspired by prior methods, aiming at finding a compromise between each initial histogram and the uniform histogram. The third term is derived from the LLE and aims at preserving the transporting of the structure of $x$ to $y$. In other words, similar to the embedding part of the LLE, histograms shall be obtained in a way that preserves the initial relationships between histograms expressed by **W.**

The cost function $C$ can be expanded and rewritten, swapping column and line summation:

$$C = \sum_{l=1}^{d} (\sum_{i=1}^{N} (||Y_i(l) - X_i(l)||^2 + \lambda||Y_i(l) - u(l)||^2 + \gamma||Y_i(l) - \sum_{j \in V(i)} w_{ij} Y_j(l)||^2)) \quad (5)$$

Denote **Y** as the matrix, whose columns are the vectors $Y_i$: **Y** = [$Y_1$ ... $Y_N$], and **X** as the matrix formed by the input vectors $X_i$. Denote $\phi_l$ and $\psi_l$ as the $l^{th}$ lines of **Y** and **X** respectively. Denote **U** as the concatenation of uniform histograms u defined earlier, i.e., **U** = [$u$ ... $u$] and $U_l$ the $l^{th}$ line of **U.**

It can be observed that the problem can be solved independently for every $l^{th}$ line:

$$\widehat{Y} = \arg \min_Y C \equiv \forall l \in [1,d], \widehat{\phi_l} = \arg \min_{\phi_l} C_{l'}$$

since

$$C = \sum_{l=1}^{d} C_{l'}$$

where

$$C_l = ||\phi_l - \psi_l||^2 + \lambda||\phi_l - U_l||^2 + \gamma||(I - W)\phi_l||^2$$

Therefore, each line of **Y** can be obtained by solving the linear system:

$$[\gamma(I - W)^T(I - W) + \lambda I]\phi_l = \lambda U_l + \psi_l \quad (6)$$

Once **Y** is computed, the $i^{th}$ column $Y_i$ is associated to the $i^{th}$ image of the database, and can be used as in the contrast enhancement technique previously described. Similarly, black and white stretching, as well as histogram smoothing, can be added.

To recap, the steps of the groupwise contrast enhancement are as follows. First, LLE is performed on the luma histograms to capture the structure of the database through local linear relationships between images. Then, the matrix **Y** of target histograms is estimated by solving, for each line, a linear system 6. Finally, each column $i$ of matrix **Y** serves as an input for the image $i^{th}$ to enhance its contrast.

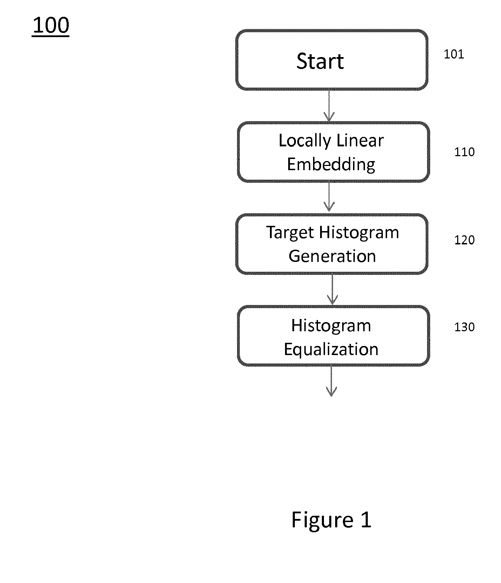

One embodiment of a method 100 for groupwise contrast enhancement for a database of images is shown in Figure 1. The method commences at Start block 101 and proceeds to block 110 for performing Locally Linear Embedding to generate a weight matrix. The method then proceeds to block 120 for generating a target histogram using the generated weight matrix from block 110. After block 120, the target histogram information is used by block 130 for performing histogram equalization on the images from the database. The result of block 130 are enhanced contrast images.

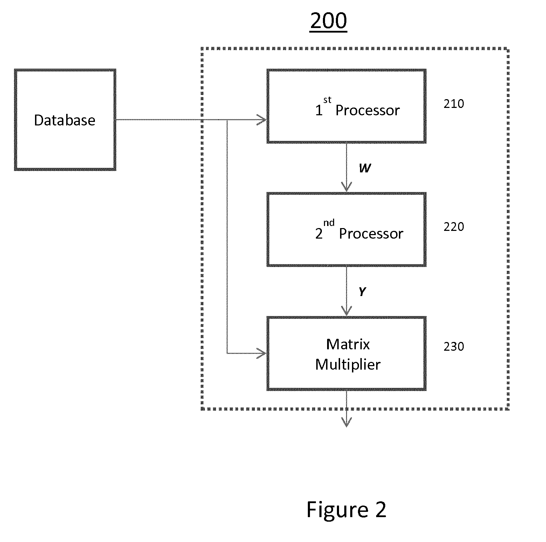

One embodiment of an apparatus 200 for groupwise contrast enhancement is shown in Figure 2. The apparatus comprises a first processor 210 configured to perform locally linear embedding on input images from a database to generate a weight matrix $W$. The apparatus further comprises a second processor 220 configured to solve a linear system of equations using the weight matrix output from the first processor 210 to generate a matrix of target histograms $Y$. The output of the first processor is in signal communication with the input of the second processor. The first processor 210 and second processor 220 can be implemented as separate units or be the same unit, or may be implemented in other hardware and/or software. The output of second processor 220 is in signal communication with a first input of matrix multiplier 230, which also receives the images from the database on a second input. Matrix multiplier 230 applies columns of the matrix of target histograms to images from the database to generate enhanced contrast images.

A general aspect of the embodiments described herein is control of a plurality of single program transport streams during a remultiplexing process.

A new method for contrast enhancement has been presented herein, where the structure of the image database is learned, and the relationships between images are explicitly preserved by the contrast enhancement method. These relationships are learned using Locally Linear Embedding. The obtained results of this method are more robust, leading to a reliable batch process of large databases.

The present description illustrates the present principles. It will thus be appreciated that those skilled in the art will be able to devise various arrangements that, although not explicitly described or shown herein, embody the present principles and are thereby included within the present principles.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles are not limited to those precise embodiments, and that various changes and modifications may be effected therein by one of ordinary skill in the pertinent art without departing from the scope of the present principles. All such changes and modifications are intended to be included within the scope of the present principles as set forth in the appended claims.

**Claims**

1. A method for contrast enhancement of a database of images, comprising:

    performing locally linear embedding on descriptors of images in a database to generate a weight matrix;
    determining a matrix of target histograms by solving a linear system of equations using said weight matrix;
    performing histogram equalization by applying columns of values from said matrix of target histograms to images from said database.

2. The method of Claim 1, wherein said linear system of equations represents a linear regression.

3. The method of Claim 1, wherein said descriptors are luma histograms of the images.

4. The method of Claim 2, wherein locally linear embedding is further performed on color descriptors of the images.

5. The method of Claim 1, wherein said descriptors are geometric descriptors.

6. The method of Claim 1, wherein said descriptors are derived from metadata.

7. The method of Claim 1, wherein locally linear embedding is performed on video.

8. The method of Claim 7, wherein temporal neighbors are used in the locally linear embedding process.

9. An apparatus for contrast enhancement of a database of images, comprising:

    a first processor configured to perform locally linear embedding on luma histograms of images in a database to generate a weight matrix;
    a second processor configured to determine a matrix of target histograms by solving a linear system of equations using said weight matrix;
a multiplier applying histogram equalization to columns of values from said matrix of target histograms to images from said database.

**10.** The apparatus of Claim 9, wherein said linear system of equations represents a linear regression.

**11.** The apparatus of Claim 9, wherein said descriptors are luma histograms of the images.

**12.** The apparatus of Claim 10, wherein locally linear embedding is further performed on color descriptors of the images.

**13.** The apparatus of Claim 9, wherein said descriptors are geometric descriptors.

**14.** The apparatus of Claim 9, wherein said descriptors are derived from metadata.

**15.** The apparatus of Claim 14, wherein said metadata is geostationary positioning satellite data.

100

Start — 101

Locally Linear Embedding — 110

Target Histogram Generation — 120

Histogram Equalization — 130

Figure 1

<u>200</u>

Figure 2

Europäisches
Patentamt

European
Patent Office

Office européen
des brevets

# EUROPEAN SEARCH REPORT

Application Number

EP 15 30 5030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANUSTUP CHOUDHURY ET AL: "A Framework for Robust Online Video Contrast Enhancement Using Modularity Optimization", IEEE TRANSACTIONS ON CIRCUITS AND SYSTEMS FOR VIDEO TECHNOLOGY, IEEE SERVICE CENTER, PISCATAWAY, NJ, US, vol. 22, no. 9, 1 September 2012 (2012-09-01), pages 1266-1279, XP011459684, ISSN: 1051-8215, DOI: 10.1109/TCSVT.2012.2198136 * the whole document * * abstract * * page 1266, right-hand column * * page 1267, left-hand column, paragraph 1 * | 1-15 | INV. G06T5/00 G06T5/40 G06T5/50 |
| A | US 2012/250988 A1 (PENG YA-TI [US] ET AL) 4 October 2012 (2012-10-04) * the whole document * * abstract * * page 1, left-hand column - page 2, left-hand column * | 1-15 | |
| A | PIZER S M ET AL: "ADAPTIVE HISTOGRAM EQUALIZATION AND ITS VARIATIONS", COMPUTER VISION GRAPHICS AND IMAGE PROCESSING, ACADEMIC PRESS, DULUTH, MA, US, vol. 39, no. 3, 1 September 1987 (1987-09-01), pages 355-368, XP001002914, * the whole document * | 1-15 | TECHNICAL FIELDS SEARCHED (IPC) G06T H04N G06K |

-/--

The present search report has been drawn up for all claims

| Place of search | Date of completion of the search | Examiner |
|---|---|---|
| Munich | 1 July 2015 | Zikic, Darko |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 5030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALBERT K. HOANG DUC ET AL: "Using Manifold Learning for Atlas Selection in Multi-Atlas Segmentation", PLOS ONE, vol. 8, no. 8, 2 August 2013 (2013-08-02), page e70059, XP055198316, DOI: 10.1371/journal.pone.0070059 * the whole document * | 1-15 | |
| A | XIN LIU ET AL: "Locally linear embedding (LLE) for MRI based Alzheimer's disease classification", NEUROIMAGE, vol. 83, 1 December 2013 (2013-12-01), pages 148-157, XP055198317, ISSN: 1053-8119, DOI: 10.1016/j.neuroimage.2013.06.033 * the whole document * | 1-15 | |
| A | PLESS: "Image spaces and video trajectories: using Isomap to explore video sequences", PROCEEDINGS NINTH IEEE INTERNATIONAL CONFERENCE ON COMPUTER VISION, 1 January 2003 (2003-01-01), page 1433, XP055198318, DOI: 10.1109/ICCV.2003.1238658 * the whole document * | 1-15 | **TECHNICAL FIELDS SEARCHED (IPC)** |

The present search report has been drawn up for all claims

| Place of search | Date of completion of the search | Examiner |
|---|---|---|
| Munich | 1 July 2015 | Zikic, Darko |

EPO FORM 1503 03.82 (P04C01)

## ANNEX TO THE EUROPEAN SEARCH REPORT
## ON EUROPEAN PATENT APPLICATION NO.

EP 15 30 5030

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2015

| Patent document cited in search report | | Publication date | Patent family member(s) | | Publication date |
|---|---|---|---|---|---|
| US 2012250988 | A1 | 04-10-2012 | CN | 103534728 A | 22-01-2014 |
| | | | TW | 201239810 A | 01-10-2012 |
| | | | US | 2012250988 A1 | 04-10-2012 |
| | | | WO | 2012134569 A1 | 04-10-2012 |

For more details about this annex : see Official Journal of the European Patent Office, No. 12/82